(19) Europäisches Patentamt
European Patent Office
Office européen des brevets

(11) Veröffentlichungsnummer: **0 301 404 B1**

(12) # EUROPÄISCHE PATENTSCHRIFT

(45) Veröffentlichungstag der Patentschrift: **18.03.92**

(51) Int. Cl.$^5$: **C08F 283/08**, C08F 257/02

(21) Anmeldenummer: **88111750.1**

(22) Anmeldetag: **21.07.88**

(54) **Pfropfpolymerisate auf Basis von Polyphenylenether.**

(30) Priorität: **29.07.87 DE 3725112**

(43) Veröffentlichungstag der Anmeldung:
**01.02.89 Patentblatt 89/05**

(45) Bekanntmachung des Hinweises auf die Patenterteilung:
**18.03.92 Patentblatt 92/12**

(84) Benannte Vertragsstaaten:
**BE DE FR GB NL**

(56) Entgegenhaltungen:
**EP-A- 0 223 116**

(73) Patentinhaber: **BASF Aktiengesellschaft**
**Carl-Bosch-Strasse 38**
**W-6700 Ludwigshafen(DE)**

(72) Erfinder: **Taubitz, Christof, Dr.**
**In der Dreispitz 16**
**W-6706 Wachenheim(DE)**
Erfinder: **Schlemmer, Lothar**
**Duisbergstrasse 1 a**
**W-6701 Maxdorf(DE)**
Erfinder: **Seiler, Erhard, Dr.**
**Erpolzheimer Strasse 1**
**W-6700 Ludwigshafen(DE)**
Erfinder: **Boehlke, Klaus, Dr.**
**Gerhart-Hauptmann-Strasse 53**
**W-6717 Hessheim(DE)**
Erfinder: **Gausepohl, Hermann, Dr.**
**Neuweg 10**
**W-6704 Mutterstadt(DE)**

EP 0 301 404 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft weitgehend unvernetzte Pfropfpolymerisate, welche in einem Lösungsmittel zu mindestens 85 Gew.-% löslich sind, aus

A) 80-99,9 Gew.-Teilen eines Basispolymeren aus 40 bis 100 Gew.-% Polyphenylenether und 0 bis 60 Gew.-% eines vinylaromatischen Polymeren,

B) 0,1-20 Gew.-Teilen eines Monomeren, enthaltend eine C=C-Doppelbindung, die an den Doppelbindungs-C-Atomen mit nur einer CO-Gruppe substituiert ist und zusätzlich zwei über eine C=C-Doppelbindung verknüpfte CO-Gruppen der Struktur

$$-CO-\overset{|}{C}=\overset{|}{C}-CO-$$

enthält, sowie

C) 0-20 Gew.-Teilen weiteren olefinisch ungesättigten Monomeren, je weils bezogen auf 100 Gew.-Teile des Pfropfpolymerisates.

Weiterhin betrifft die Erfindung die Herstellung und Verwendung dieser Pfropfpolymerisate.

Die Modifizierung von Polyphenylenether durch Pfropfung mit olefinisch ungesättigten Verbindungen zur Verbesserung der anwendungstechnischen Eigenschaften ist bereits bekannt. So können nach üblichen Methoden z.B. Styrol (vgl. z.B. US-Patent 3 929 931, JP-A 52/33949 und JP-A 53/16757), Vinylpyridin (vgl. US-Patent 4 278 777), Methylmethacrylat (vgl. EP-A 54 140), zusätzlich Acrylate, Nitrile oder ungesättigte Carbonsäuren (vgl. EP-A 25 200) oder eine Mischung aus Styrol und Acrylnitril (vgl. EP-A 83 098 und 59 482, US-Patente 3 522 326 und 4 486 568 sowie DE-A 3 100 534) auf Polyphenylenether pfropfpolymerisiert werden. Eine Mischung von Styrol und Methacrylaten bzw. Maleinsäureanhydrid (EP-A 17 939 bzw. JP-8 77/19864) wurde auf Polyphenylenether aufgepfropft, um u.a. die Haftfähigkeit auf anorganischen Materialien zu erhöhen. Im allgemeinen arbeitet man in Gegenwart eines organischen Peroxides als Radikalstarter entweder in Lösung, wäßriger Dispersion oder in einem Schmelzextruder.

Die Verfahren benötigen jedoch im allgemeinen ungünstig hohe Pfropftemperaturen, hohe Mengen an Radikalstartern bzw. sind langwierig und umständlich.

Außerdem war bekannt, Polyphenylenether mit Maleinimid (EP-A 222 246), Fumarsäure (EP-A 223 116) oder Maleinsäurehalbester (EP-A 254 048 (Stand der Technik nach Art. 54 (3) EPü) zu pfropfen.

Weiterhin ist es aus DE-A 33 07 408 bekannt, Polymere mit Hilfe von oligomeren Estern der Maleinsäure mit aliphatischen Diolen und Alkoholen durch radikalerzeugende Strahlung zu vernetzen. Diese hochvernetzten Produkte sind jedoch nicht thermoplastisch verarbeitbar und daher nur äußerst begrenzt einsetzbar.

Darüber hinaus war es aus US-P 4 097 556 bekannt, Polyphenylenether und Polystyrol in Gegenwart von Styrol und einem Radikalstarter zu mischen, um ein Pfropfcopolymerisat zu erhalten. Nachteilig ist, daß die Umsetzung nicht vollständig abläuft, so daß Produkte mit hoher Uneinheitlichkeit und naturgemäß schlechtem Eigenschaftsbild entstehen.

Aufgabe der vorliegenden Erfindung war es daher, weitgehend unvernetzte Pfropfpolymerisate auf Basis von Polyphenylenether bereitzustellen, die die geschilderten Nachteils vermeiden und einheitliche Produkte mit hoher Pfropfausbeute liefern, wenn sie ihrerseits mit Monomeren gepfropft werden.

Demgemäß wurden weitgehend unvernetzte Pfropfpolymerisate, welche in einem Lösungsmittel zu mindestens 85 Gew.-% löslich sind, aus

A) 80-99,9 Gew.-Teilen eines Basispolymeren aus 40 bis 100 Gew.-% Polyphenylenether und 0 bis 60 Gew.-% eines vinylaromatischen Polymeren,

B) 0,1-20 Gew.-Teilen eines Monomeren, enthaltend eine C=C-Doppelbindung, die an den Doppelbindungs-C-Atomen mit nur einer CO-Gruppe substituiert ist und zusätzlich zwei über eine C=C-Doppelbindung verknüpfte CO-Gruppen der Struktur

$$-CO-\overset{|}{C}=\overset{|}{C}-CO-$$

enthält, sowie

C) 0-20 Gew.-Teilen weiteren olefinisch ungesättigten Monomeren, jeweils bezogen auf 100 Gew.-Teile des Pfropfpolymerisates,

gefunden.

Weiterhin wurden spezielle Ausgestaltungen der Erfindung gemäß der Unteransprüche und ein Verfahren zu ihrer Herstellung und ihre Verwendung zur Herstellung von Pfropfcopolymeren gefunden.

Die Komponente A bildet das Basispolymere für die erfindungsgemäßen Pfropfpolymerisate, die 80 bis 99,9 bevorzugt 90 bis 99,9, insbesondere 94 bis 99,5 Gew.-Teile, bezogen auf 100 Gew.-Teile des Pfropfpolymerisates, von A enthalten.

Das Basispolymere besteht aus 40 bis 100 Gew.-% Polyphenylenether und 0 bis 60, bevorzugt 2 bis 10 Gew.-% eines vinylaromatischen Polymerisates.

Die Polyphenlenether werden nach bekannten Verfahren aus in ortho-Position durch Alkylgruppen disubstituierten Phenolen durch oxidative Kupplung hergestellt (vgl. US-Patent 3 661 848, 3 378 505, 3 306 874, 3 306 875 und 3 639 656). Die gegebenenfalls alkylsubstituierten Polyphenylenether sind bevorzugt mit vinylaromatischen Polymerisaten verträglich.

Polymere gelten als miteinander verträglich, wenn sie weitgehend oder ganz ineinander löslich sind (vgl. A. Noshay, "Block Copolymers, Academic Press [1977], Seiten 8 bis 10; sowie O. Olabisi, "Polymer-Polymer Miscibility", Academic Press [1979], Seiten 117 bis 189.

Verträgliche Polyphenylenether sind beispielsweise
Poly(2,6-diethyl-1,4-phenylen)-ether,
Poly(2-methyl-6-ethyl-1,4phenylen)-ether,
Poly(2-methyl-6-propyl-1,4-phenylen)-ether,
Poly(2,6-dipropyl-1,4-phenylen)ether,
Poly(2-ethyl-6-propyl-1,4-phenylen)-ether oder Copolymere, wie solche, die 2,3,6-Trimethylphenol enthalten, außerdem Polymermischungen. Besonders bevorzugt ist jedoch Poly(2,6-dimethyl-1,4-phenylen)-ether.

Die Polyphenylenether sind im allgemeinen hochmolekular. Sie weisen üblicherweise Molekulargewichte von 10 000 bis 90 000, insbesondere 20 000 bis 80 000, bestimmt nach der in "Macromolecular Syntheses" 1 (1977), Seite 83, angegebenen Methode, auf. Ein Teil des Polyphenylenethers kann, wie schon erwähnt, durch ein vinylaromatisches Polymerisat ersetzt sein, das bevorzugt mit dem Polyphenylenether verträglich ist.

Mit Polyphenylenether verträgliche vinylaromatische Polymerisate sind beispielsweise von O. Olabisi in "Polymer-Polymer Miscibility", Academic Press (1979), Seiten 224 bis 230 und 245 beschrieben. Besonders geeignet sind vinylaromatische Polymerisate, die bestehen aus: Styrol, Chlorstyrol, α-Methylstyrol, p-Methylstyrol, im untergeordneten Maße (vorzugsweise unter 8 Gew.-%) aus (Meth)acrylnitril. Besonders bevorzugt wird Polystyrol eingesetzt.

Das Gewichtsmittel ($M_w$) des Molekulargewichts der vinylaromatischen Polymeren beträgt 1500 bis 2 000 000, besonders bevorzugt 70 000 bis 1 000 000.

Die Polymerisate können durch die üblichen Polymerisationsverfahren, wie Masse-, Suspensions-, Emulsions- oder Lösungspolymerisation hergestellt werden.

Das Basispolymere A reagiert durch Umsetzung mit dem Monomeren B und gegebenenfalls weiteren Monomeren C zum erfindungsgemäßen Pfropfpolymerisat.

B liegt im Pfropfpolymerisat in Mengen von 0,1 bis 20, bevorzugt 0,1 bis 10, insbesondere 0,5 bis 6 Gew.-Teilen, bezogen auf 100 Gew.-Teile des Pfropfpolymerisates, vor.

Die C = C-Doppelbindungen in B, die an den Doppelbindungs-C-Atomen mit nur einer CO-Gruppe substituiert ist, ist im allgemeinen ein Molekülteil der Struktur

$$-\overset{|}{C}=\overset{|}{C}-COR_1- \quad ,$$

wobei $R_1$ für -O-, einen $C_1$ bis $C_{20}$-Alkylenoxyrest oder $-NR_2-$ und $R_2$ für - H oder einen aliphatischen $C_1$ bis $C_{20}$-Rest stehen.

Die zwei über eine C = C-Doppelbindung verknüpften CO-Gruppen können ein Molekülteil der Struktur

$$-OOC-\overset{|}{C}=\overset{|}{C}-COOR_3$$

sein, wobei $R_3$ -H, $C_1$-$C_{20}$-Alkyl, $NH_4$, Li, Na, $Ca_{(1/2)}$ oder $Zn_{(1/2)}$ sein können.

Beide Molekülteile sind in B in einem Monomeren vereinigt. Auf die übrigen Eigenschaften kommt es, was sich allerdings von selbst versteht, nicht an, soweit sie nicht die Pfropfreaktion verhindern und die

Eigenschaften der erfindungsgemäßen Pfropfpolymerisate verschlechtern.

Bevorzugt ist B ein Monomeres der allgemeinen Formel I

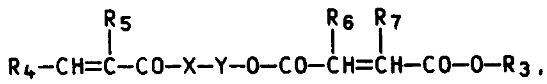

I

wobei

| | |
|---|---|
| $R_3$ | die obengenannte Bedeutung, insbesondere -H, |
| $R_4$ | $C_1$-$C_8$-Alkyl, insbesondere -H, |
| $R_5$ | $C_2$-$C_8$-Alkyl, insbesondere $-CH_3$ oder -H, |
| $R_6$, $R_7$ | $C_1$-$C_3$-Alkyl, Chlor und insbesondere -H, |
| X | $-NR_4-$ und insbesondere -O- und |
| Y | Cycloalkylen oder Alkylen mit bis zu 12 C-Atomen, insbesondere $C_2$-Alkylen |

bedeuten. Diese an sich bekannten Monomeren sind durch übliche Umsetzungen wie esterbildende Reaktionen zugänglich und im Handel erhältlich.

Insbesondere sind Maleinsäure-mono-2-acryloxyethylester und Maleinsäure-mono-2-methacryloxyethylester bevorzugt.

Als pfropfpolymerisierbare Monomere mit olefinischen Doppelbindungen C eignen sich Styrol, Acrylnitril, Methylmethacrylat, Maleinsäureanhydrid oder deren Gemische, bevorzugt in Mengen unter 20 Gew.-Teilen, bezogen auf 100 Gew.-Teile des Pfropfpolymerisates. Besonders bevorzugt fehlt C.

Die erfindungsgemäßen Polymerisate können in bekannter Weise, z.B. durch Zusatz von Verstärkungs- und Füllstoffen, Stabilisatoren, Gleit- und Flammschutzmitteln sowie Farbstoffen und Pigmenten modifiziert werden.

Das Pfropfpolymerisat kann in Lösung oder Dispersion hergestellt werden. Bevorzugt ist jedoch die Pfropfpolymerisation in einem Schmelzextruder. Dazu werden die Komponenten bei Temperaturen von 170 bis 350 °C, vorzugsweise zwischen 240 und 300 °C innig vermischt und zur Reaktion gebracht, wobei gegebenenfalls der Schmelzpunkt des Polyphenylenethers durch Zusätze variiert werden kann. Vorzugsweise verwendet man einen Zweischneckenextruder, der mit Knetelementen, zum Teil mit rückwärtsförderndem Gewinde, ausgerüstet sein kann. Die Komponenten werden im allgemeinen gemeinsam dosiert und in einer Aufschmelzzone des Extruders aufgeschmolzen. An diese Zone schließt sich üblicherweise die Reaktionszone an. Vor dem Produktaustrag befindet sich im allgemeinen eine Entgasungszone zur Entfernung der flüchtigen Bestandteile. Die Verweilzeit im Extruder beträgt im allgemeinen 0,5 bis 10 Minuten, bevorzugt 1 bis 5 Minuten. Die ausgetragene Schmelze wird üblicherweise granuliert.

Bei der Reaktion kann ein Radikalstarter, der bevorzugt ein organisches Peroxid oder eine Azoverbindung ist, zugegen sein. Solche Radikalstarter sind dem Fachmann bekannt. Allgemein werden organische Peroxide mit einer Halbwertszeit des Zerfalls (vgl. Modern Plastics 36, 1959, Heft 2, Seiten 142 bis 148) bei 200 °C von 1 bis 300 Sekunden verwendet. Die Wahl des Radikalstarters richtet sich nach der gewünschten Reaktionstemperatur. Beispielhaft seien genannt Di-cumyl-peroxid und Di-tert.-butylperoxid.

Die Radikalstarter können in Mengen unter 10 Gew.-%, bevorzugt unter 3 Gew.-%, bezogen auf die eingesetzten Reaktionskomponenten, anwesend sein. Man erhält besonders gut lösliche Produkte, wenn man, insbesondere bei Temperaturen über 240 °C, ohne Zusatz eines Radikalstarters, d.h. in Abwesenheit oder praktischer Abwesenheit von Radikalstartern arbeitet.

Unter weitgehend unvernetzten Pfropfpolymerisaten im Sinne der Erfindung sind solche zu verstehen, die in einem Lösungsmittel nicht nur quellen, sondern im wesentlichen, d.h. zu mindestens 85 Gew.-%, bevorzugt 90 Gew.-% löslich sind.

Die Bestimmung der löslichen Anteile der Pfropfpolymerisate wird üblicherweise wie folgt durchgeführt: 5 g des Pfropfpolymerisates werden mit 95 g $CH_2CL_2$ 15 Minuten am Rückfluß gekocht. Dann wird das Produkt sofort durch eine Glasfritte Typ G 4, filtriert. Man dampft ein und bestimmt den Rückstand.

Die erfindungsgemäßen Polyphenylenetherharze haben eine gute Wärmeformbeständigkeit, gekoppelt mit einer hellen Eigenfarbe, was ihre Gebrauchseigenschaften deutlich erhöht. Sie können ohne Schwierigkeit durch thermoplastische Verformungsverfahren wie Spritzguß oder Extrusion verarbeitet und als Formteile oder zur Beschichtung von Oberflächen eingesetzt werden. Insbesondere können sie in vorteilhafter Weise durch Pfropfung mit olefinisch ungesättigten, bevorzugt vinylaromatischen Monomeren weiter zu Pfropfcopolymerisaten umgesetzt werden. Die guten Produkteigenschaften der Pfropfcopolymerisate, wie zum Beispiel gute Vernetzbarkeit nach der Verarbeitung werden durch die hohe Pfropfaktivität der erfindungsgemäßen Pfropfpolymerisate hervorgerufen. Es ist nämlich mit den erfindungsgemäßen Pfropfpolymerisaten möglich, den weitaus größten Teil der Monomeren auf die Pfropfpolymerisate aufzupfropfen, so daß vorteilhafte einheitliche Produkte entstehen.

Bei dieser Umsetzung werden die erfindungsgemäßen Pfropfpolymerisate nach üblichen Methoden (z.B. US-Patent 4 097 556) im allgemeinen in Gegenwart von anderen Polymerisaten, bevorzugt vinylaromatischen Polymeren wie Polystyrol, im allgemeinen radikalisch mit olefinisch ungesättigten Monomeren gepfropft. Als Monomere kommen insbesondere Styrol und $C_{1-4}$-Alkylsubstituierte Styrole, daneben auch ungesättigte Nitrile wie Acrylnitril, $C_{1-8}$-Alkylacrylate und -methacrylate, Diene wie Butadien, Maleinsäure oder Maleinsäureanhydrid in Betracht.

Beispiel 1:

9,35 kg Poly-(2,6-Dimethyl-1,4-phenylen)ether (PPE) mit einer relativen Viskosität von 0,54, gemessen in 1 gew.-%iger Chloroformlösung bei 25 °C, 0,5 kg Polystyrol ($M_w$ = 200.000) und 0,15 kg Maleinsäure-mono-2-acryloxyethylester (Fa. Röhm Chemieprodukte) wurden in einem Zweischneckenextruder bei 270 °C miteinander umgesetzt und anschließend in einer Entgasungszone bei 280 °C bei vermindertem Druck entgast. Die mittlere Verweilzeit im Extruder betrug 1,8 Minuten. Die Schmelze wurde zur Kühlung durch ein Wasserbad geleitet, granuliert und getrocknet.

Beispiel 2:

9,20 kg PPE, 0,7 kg Polystyrol und 0,1 kg Maleinsäure-mono-2-acryloxyethylester werden gemäß Beispiel 1 umgesetzt.

Vergleichspolymere:

Zur Bestimmung der Pfropfaktivität wurden folgende Vergleichspolymere eingesetzt:

V(1): 9,35 kg des PPE aus Beispiel 1 und 0,5 kg des Polystyrols aus Beispiel 1 wurden mit 0,15 kg Maleinsäuremonoethylester wie in Beispiel 1 umgesetzt.

V(2): Man arbeitete wie bei V(1), setzte jedoch Ethylacrylat statt des Maleinsäuremonoethylesters ein.

V(3): Man arbeitete wie bei V(1), setzte jedoch statt 0,15 kg Maleinsäuremonoethylester eine Mischung aus
0,075 kg Ethylacrylat und
0,075 kg Maleinsäuremonoethylester ein.

V(4): Man arbeitete wie bei V(1), setzte jedoch Fumarsäure statt des Maleinsäuremonoethylesters ein.

v(5): Man arbeitete wie bei V(1), setzte jedoch N-Phenylmaleinimid statt des Maleinsäuremonoethylesters ein.

V(6) : unmodifiziertes PPE aus Beispiel 1

Pfropfung mit Styrol:

Zur Überprüfung der Pfropfaktivität wurden 700 Gew.-Teile der Polymerisate gemäß Tabelle 1, 500 Gew. -Teile Polystyrol ($M_W$ = 200.000) und eine Lösung von 30 Gew.-Teilen 2,5-Dimethyl-2,5-di(tert-butylperoxy)hexan in 200 Gew.-Teilen Styrol in einem Zweischneckenextruder gemischt und umgesetzt, wobei die Temperatur 250 °C betrug und die Verweilzeit 2 Min. Im Entgasungsdom wurden flüchtige Bestandteile abgezogen, das erhaltene Pfropfcopolymerisat wurde ausgetragen und granuliert.

Die erhaltenen Pfropfcopolymerisate wurden auf Pfropfausbeute untersucht. Dazu wurde das Granulat in $CH_2Cl_2$ (5 gew.-%ig) zum Sieden erwärmt und anschließend 24 h bei 20 °C gehalten. Polyphenylenether bildet einen $CH_2Cl_2$-Komplex, der ausfällt (s. D.M. White, Journal of Polymer Science, Polymer Chemistry Edition, Vol. 21, 2921-2936 (1983). Der Niederschlag wurde abzentrifugiert, getrocknet und ausgewogen. Der Niederschlag besteht aus Polyphenylenether und Polyphenylenether mit aufgepfropftem Polystyrol.

Die folgende Tabelle 1 zeigt die Menge des aufgepfropften Polystyrols in Gew.-%, bezogen auf die Gesamtmenge des Polystyrols in den Pfropfcopolymerisaten, die sich zusammensetzt aus dem bei der Pfropfung mit Styrol zugegebenem Polystyrol und monomerem Styrol.

Tabelle 1

| Polymerisat | | aufgepfropftes Polystyrol [Gew.-%] |
|---|---|---|
| nach Beispiel 1 | erfindungsgemäß | 60 |
| " " 2 | " | 55 |
| V(1) | Vergleich | 12 |
| V(2) | " | 7 |
| V(3) | " | 13 |
| V(4) | " | 8 |
| V(5) | " | 12 |
| V(6) | " | 11 |

## Patentansprüche

1. Weitgehend unvernetzte Pfropfpolymerisate, welche in einem Lösungsmittel zu mindestens 85 Gew.-% löslich sind, aus
   A) 80-99,9 Gew.-Teilen eines Basispolymeren aus 40 bis 100 Gew.-% Polyphenylenether und 0 bis 60 Gew.-% eines vinylaromatischen Polymeren,
   B) 0,1-20 Gew.-Teilen eines Monomeren, enthaltend eine C=C-Doppelbindung, die an den Doppelbindungs-C-Atomen mit nur einer CO-Gruppe substituiert ist und zusätzlich zwei über eine C=C-Doppelbindung verknüpfte CO-Gruppen der Struktur

   -CO-C=C-CO

   enthält, sowie
   C) 0-20 Gew.-Teilen weiteren olefinisch ungesättigten Monomeren, jeweils bezogen auf 100 Gew.-Teile des Pfropfpolymerisates.

2. Pfropfpolymerisate nach Anspruch 1, in denen B Maleinsäure-mono-2-acryloxyethylester oder Maleinsäure-mono-2-methacryloxyethylester ist.

3. Pfropfpolymerisate nach den Ansprüchen 1 oder 2 aus 90 bis 99,9 Gew.-Teilen der Komponente A und 0,1 bis 10 Gew.-Teilen der Komponente B, jeweils bezogen auf 100 Gew.-Teile des Pfropfpolymerisates.

4. Verfahren zur Herstellung von Pfropfpolymerisaten gemäß den Ansprüchen 1 bis 3 durch Pfropfung eines Polyphenylenethers mit einem Pfropfmonomeren, dadurch gekennzeichnet, daß man als Pfropfmonomeres ein Monomeres B und gegebenenfalls weitere olefinische ungesättigte Monomere C verwendet.

5. Verfahren nach Anspruch 4, dadurch gekennzeichnet, daß man die Pfropfung bei 170 bis 350 °C vornimmt.

6. Verfahren nach den Ansprüchen 4 und 5, dadurch gekennzeichnet, daß man die Pfropfung in Abwesenheit oder praktischer Abwesenheit eines Radikalstarters vornimmt.

7. Verwendung der Pfropfpolymerisate gemäß den Ansprüchen 1 bis 6 zur Herstellung von Pfropfcoplymerisaten durch Pfropfung mit olefinisch ungesättigten Monomeren.

## Claims

1. A substantially uncrosslinked graft polymer which is at least 85% by weight soluble in a solvent and comprises
   A) 80-99.9 parts by weight of a base polymer comprising from 40 to 100% by weight of polyphenylene ether and from 0 to 60% by weight of a vinylaromatic polymer,
   B) 0.1-20 parts by weight of a monomer which contains a C=C double bond, is substituted on the double bond carbon atoms by only one CO group and additionally contains two CO groups which are linked via a C=C double bond, of the structure

   -CO-C=C-CO,

   and
   C) 0-20 parts by weight of other olefinically unsaturated monomers, in each case based on 100 parts by weight of the graft polymer.

2. A graft polymer as claimed in claim 1, in which B is mono-2-acryloxyethyl maleate or mono-2-methacryloxyethyl maleate.

3. A graft polymer as claimed in claim 1 or 2, comprises from 90 to 99.9 parts by weight of component A and from 0.1 to 10 parts by weight of component B, in each case based on 100 parts by weight of the graft polymer.

4. A process for the preparation of a graft polymer as claimed in claim 1 or 2 or 3 by grafting a polyphenylene ether with a graft monomer, wherein the graft monomer used is a monomer B and, if desired, further olefinically unsaturated monomers C.

5. A process as claimed in claim 4, wherein the grafting is carried out at from 170 to 350 °C.

6. A process as claimed in claim 4 or 5, wherein the grafting is carried out in the absence or virtual absence of a free-radical initiator.

7. The use of a graft polymer as claimed in claim 1 or 2 or 3 for the preparation of a graft copolymer by grafting with olefinically unsaturated monomers.

## Revendications

1. Polymères greffés non réticulés dans une large mesure, qui sont solubles à raison d'au moins 85% dans un solvant, composés de:
   A) 80-99,9 parties en poids d'un polymère de base constitué par 40 à 100% en poids de poly(oxyde de phénylène) et par 0 à 60% en poids d'un polymère vinylaromatique,
   B) 0,1-20 parties en poids d'un monomère contenant une double liaison C=C qui est substituée par un seul groupement CO sur les atomes de carbone de la double liaison et qui contient en plus deux groupements CO reliés par une double liaison C=C, de structure

   -CO-C=C-CO ,

   et
   C) 0-20 parties en poids d'autres monomères à insaturation oléfinique,
   par rapport, chaque fois, à 100 parties en poids du polymère greffé.

2. Polymères greffés selon la revendication 1, dans lesquels B est le maléate de mono-2-acryloxyéthyle ou le maléate de mono-2-méthacryloxyéthyle.

3. Polymères greffés selon la revendication 1 ou 2, composés de 90 à 99,9 parties en poids du composant A et de 0,1 à 10 parties en poids du composant B par rapport, chaque fois, à 100 parties en poids du polymère greffé.

4. Procédé de préparation de polymères greffés selon l'une quelconque des revendications 1 à 3, par greffage d'un poly(oxyde de phénylène) avec un monomère de greffage, caractérisé en ce qu'on utilise, comme monomère de greffage, un monomère B et éventuellement d'autres monomères à insaturation oléfinique C.

5. Procédé selon la revendication 4, caractérisé en ce qu'on procède au greffage à une température de 170 à 350 ° C.

6. Procédé selon la revendication 4 ou 5, caractérisé en ce qu'on procède au greffage en l'absence ou pratiquement en l'absence d'un initiateur radicalaire.

7. Utilisation des polymères greffés selon l'une quelconque des revendications 1 à 6 pour la préparation de copolymères greffés par greffage avec des monomères à insaturation oléfinique.